# EUROPEAN PATENT APPLICATION

(11) **EP 4 769 981 A1**
(43) Date of publication of application: **01.07.2026**
(21) Application number: 24864640.8
(22) Date of filing: 11.09.2024
(51) Int. Cl.: H04B 17/12

(54) **DETECTION NETWORK AND DETECTION METHOD FOR ANTENNA SIGNAL, AND ANTENNA SYSTEM AND BASE STATION**

(30) Priority: 12.09.2023 CN 202311172738
(71) Applicant: Huawei Technologies Co., Ltd., Shenzhen, Guangdong 518129 (CN)
(72) Inventor: LIAO, Zhiqiang, Shenzhen, Guangdong 518129 (CN); LI, Jianping, Shenzhen, Guangdong 518129 (CN); XIAO, Weihong, Shenzhen, Guangdong 518129 (CN); ZHU, Xiaolong, Shenzhen, Guangdong 518129 (CN); ZENG, Yixing, Shenzhen, Guangdong 518129 (CN)
(74) Representative: Maiwald GmbH
(86) International application number: PCT/CN2024/118141
(87) International publication number: WO 2025/055924

(57) **Abstract**

This application provides an antenna signal detection network and detection method, an antenna system, and a base station. The detection network includes two calibration channels and a switching network. A first calibration channel includes a plurality of first output ports, and phases of the plurality of first output ports are the same. A second calibration channel includes a plurality of second output ports, a quantity of the second output ports is the same as a quantity of the first output ports, phases of the plurality of second output ports are different from each other, and the plurality of first output ports and the second output ports are connected to antenna arrays. The switching network is connected to the two calibration channels, and is configured to connect the two calibration channels to a calibration port in different time domains. The calibration port is connected to an RRU, and the calibration port is configured to input a transmission signal between the antenna array and the RRU. According to the antenna signal detection network and detection method, the antenna system, and the base station provided in this application, correctness of a connection between an antenna array and the RRU can be quickly and conveniently detected.

## Description

This application claims priority to Chinese Patent Application No. 202311172738.1, filed with the China National Intellectual Property Administration on September 12, 2023 and entitled "ANTENNA SIGNAL DETECTION NETWORK AND DETECTION METHOD, ANTENNA SYSTEM, AND BASE STATION", which is incorporated herein by reference in its entirety.

### TECHNICAL FIELD

Embodiments of this application relate to the field of wireless communication, and more specifically, to an antenna signal detection network and detection method, an antenna system, and a base station.

### BACKGROUND

With the development of mobile communication, a demand for data services continuously increases, and the communication industry continuously searches for a method for expanding data capacities. It has become a current trend to use a plurality of channels to improve capacities, for example, use an 8T (transmit) 8R (receive) antenna. As a result, there is an increasing quantity of antenna ports on a single site, an increasing quantity of devices in a feeder network, and an increasing quantity of base stations. These factors, however, raise complexity in installation, configuration, and maintenance of antenna systems. The correctness of a connection topology among devices directly affects network functionality and performance. Detecting connection topology using methods such as network drive tests are lengthy and has low accuracy in problem determining. In addition, auxiliary detection functions of primary devices are only in limited scenarios, placing significant constraints on detection of connection relationships of links within the topology network.

### SUMMARY

Embodiments of this application provide an antenna signal detection network and detection method, an antenna system, and a base station, which can quickly and conveniently detect whether connections between antenna arrays and an RRU is correct.

According to a first aspect, an antenna signal detection network is provided, and includes a first calibration channel, a second calibration channel, and a first switching network. The first calibration channel includes a plurality of first output ports, and phases of the plurality of first output ports are the same. The second calibration channel includes a plurality of second output ports, a quantity of the plurality of second output ports is the same as a quantity of the plurality of first output ports, phases of the plurality of second output ports are different from each other, and the plurality of first output ports and the plurality of second output ports are separately connected to antenna arrays. The first switching network is connected to both the first calibration channel and the second calibration channel, and is configured to connect the first calibration channel and the second calibration channel to a calibration port in different time domains, where the calibration port is connected to a remote radio unit RRU, and the calibration port is configured to input a transmission signal between the antenna arrays and the RRU.

In this embodiment provided in this application, the phases of the plurality of first output ports on the first calibration channel are the same. When the first calibration channel is connected to the calibration port through the switching network, phases of connections between the RRU and the antenna array may be calibrated, to implement that a baseline phase of a system is set to zero. The phases of the plurality of second output ports on the second calibration channel are different from each other. When the second calibration channel is connected to the calibration port through the switching network, phase differences of the plurality of second output ports can be obtained. In this way, whether connections between an antenna and the RRU are incorrect can be quickly and conveniently determined by comparing the obtained phase differences with phase differences stored in the system, thereby effectively improving detection efficiency and accuracy. The detection network is disposed to detect whether a connection between the antenna array and the RRU is correct. A radio frequency channel does not need to be improved, and no additional component needs to be disposed to detect a signal. This can avoid increase in loss caused by changes of the radio frequency channel, avoid decrease in system stability, and can be applied to detection of the connections between the antenna and the RRU in more scenarios, effectively reducing detection costs.

With reference to the first aspect, in some implementations of the first aspect, any one of the plurality of second output ports is a reference port, and phase differences between ports in the plurality of second output ports other than the reference port and the reference port are different from each other.

In this embodiment provided in this application, the phase differences between the ports in the plurality of second output ports other than the reference port and the reference port are different from each other, so that different phase differences of the second output ports can be compared with the phase differences that are of the corresponding ports and that are stored in the system, to determine whether connections between an antenna corresponding to each port and the RRU is correct.

With reference to the first aspect, in some implementations of the first aspect, the phase differences between the ports in the plurality of second output ports other than the reference port and the reference port form an arithmetic progression.

In this embodiment provided in this application, the phase differences between the ports in the plurality of second output ports other than the reference port and the reference port form the arithmetic progression, so that the system can record the phases of the second output ports more efficiently and conveniently and compare the phases with corresponding phase differences stored in the system, thereby further improving signal detection efficiency.

With reference to the first aspect, in some implementations of the first aspect, ends of the first calibration channel and the second calibration channel include a plurality of isolators, the plurality of isolators are configured to prevent signal interference between the first calibration channel and the second calibration channel, and the first calibration channel and the second calibration channel are respectively connected to two output ports of each of the plurality of isolators, where output ports that are of the plurality of isolators and that are connected to the first calibration channel are the first output ports, and output ports that are of the plurality of isolators and that are connected to the second calibration channel are the second output ports.

In this embodiment provided in this application, the detection network includes isolators, and output ports of the isolator are respectively connected to the two calibration channels, so that miniaturization of the entire detection network can be implemented. In addition, the isolators can prevent signals generated when one calibration channel operates from interfering with the other calibration channel.

With reference to the first aspect, in some implementations of the first aspect, there are further a plurality of couplers at the ends of the first calibration channel and the second calibration channel, the plurality of couplers are respectively connected to input ports of the plurality of isolators, and the plurality of couplers are connected to the antenna arrays.

In this embodiment provided in this application, there are the couplers at the ends of the two calibration channels, and the couplers are connected to the input ports of the isolators. This can facilitate the detection network in capturing the transmission signal between the antenna array and the RRU, so as to detect, based on the captured transmission signal, whether the connection between the antenna array and the RRU is correct. The coupler can capture transmission signals in different time domains for the two calibration channels to perform detection. There is no need to configure each calibration channel with a respective coupler, and miniaturization of the entire detection network can be further implemented.

With reference to the first aspect, in some implementations of the first aspect, the isolator is a first power divider or a second switching network.

With reference to the first aspect, in some implementations of the first aspect, the first calibration channel includes multi-level transmission lines, and last-level transmission lines in the multi-level transmission lines of the first calibration channel are connected to the plurality of isolators. In the multi-level transmission lines of the first calibration channel, there is a second power divider at an end of each level of transmission line other than the last-level transmission lines, and phases of transmission lines corresponding to two output ports of each second power divider are the same.

In this embodiment provided in this application, the first calibration channel includes the multi-level transmission lines, and the phases of the transmission lines corresponding to the two output ports of each second power divider are the same. This can ensure that the phases of the plurality of first output ports are the same. Further, when the first calibration channel is connected to the calibration port, the baseline phase of the system can be set to zero.

With reference to the first aspect, in some implementations of the first aspect, the second calibration channel includes multi-level transmission lines, and last-level transmission lines in the multi-level transmission lines of the second calibration channel are connected to the plurality of isolators. In the multi-level transmission lines of the second calibration channel, there is a third power divider at an end of each level of transmission line other than the last-level transmission lines, and phases of transmission lines corresponding to two output ports of each third power divider are different from each other.

In this embodiment provided in this application, the second calibration channel includes the multi-level transmission lines, and the phases of the transmission lines corresponding to the two output ports of each third power divider are different from each other. This can ensure that the phases of the plurality of second output ports are different from each other. Further, when the second calibration channel is connected to the calibration port, a phase difference of each second output ports can be obtained, and correctness of a connection between the antenna array corresponding to each second output port and the RRU is determined based on the obtained phase difference.

With reference to the first aspect, in some implementations of the first aspect, a switch of the first switching network is an analog switch or a PIN diode switch.

In this embodiment provided in this application, the switch of the first switching network is the analog switch or the PIN diode switch, so that miniaturization of the detection network can be implemented.

With reference to the first aspect, in some implementations of the first aspect, the quantity of the first output ports and/or the quantity of the second output ports are/is greater than or equal to 8.

According to a second aspect, an antenna signal detection method is provided, and is applied to the detection network according to the first aspect or any one of possible implementations of the first aspect. The detection method includes: connecting the calibration port to the first calibration channel at a first moment through the first switching network; connecting the calibration port to the second calibration channel at a second moment through the first switching network, and obtaining phase differences of the plurality of second output ports, where the second moment is later than the first moment; and comparing the obtained phase differences with phase differences of the plurality of second output ports stored in a system.

In this embodiment provided in this application, when the first calibration channel is connected to the calibration port through the switching network, because phases of a plurality of first output ports are the same, phases of connections between an RRU and antenna arrays may be calibrated, to implement that a baseline phase of a system is set to zero. When the second calibration channel is connected to the calibration port through the switching network, the phase differences of the plurality of second output ports can be obtained, so that the network can compare the obtained phase differences with the phase differences stored in the system, to quickly and conveniently determine whether the connections between antennas and the RRU are incorrect. The detection network detects whether connections between antenna arrays and the RRU are correct. A radio frequency channel does not need to be improved, and no additional component needs to be disposed to detect signals. This can avoid increase in loss caused by changes of the radio frequency channel, avoid decrease in system stability, for example, rise in a PIM indicator, and can effectively reduce detection costs.

With reference to the second aspect, in some implementations of the second aspect, the detection method further includes: when a difference in differences between the obtained phase differences and the phase differences of the plurality of second output ports stored in the system is less than a preset threshold, determining that a connection between an antenna array and the RRU is correct; or when a difference in differences between the obtained phase differences and the phase differences of the plurality of second output ports stored in the system is greater than or equal to a preset threshold, determining that a connection between an antenna array and the RRU is incorrect.

With reference to the second aspect, in some implementations of the second aspect, when the connection between the antenna array and the RRU is incorrect, the detection method further includes: performing logical mapping and exchange for the connection between the antenna array and the RRU.

According to a third aspect, an antenna system is provided, and includes the detection network according to the first aspect or any one of possible implementations of the first aspect and antenna arrays, where the antenna array includes one or more antenna elements.

According to a fourth aspect, a base station is provided, and includes the antenna system according to the third aspect and a radio frequency module connected to the antenna system.

### BRIEF DESCRIPTION OF DRAWINGS

FIG. 1 is a diagram of structures of an antenna system and a base station according to an embodiment of this application;
FIG. 2 is a diagram of a structure of an antenna signal detection network according to an embodiment of this application;
FIG. 3 is a diagram of a structure of an antenna signal detection network according to an embodiment of this application;
FIG. 4 is a diagram of a structure of a transmission line according to an embodiment of this application;
FIG. 5 is a diagram of a structure of an antenna signal detection network according to an embodiment of this application;
FIG. 6 is a diagram of a structure of an antenna signal detection network according to an embodiment of this application;
FIG. 7 is a diagram of structures of a switching network according to an embodiment of this application;
FIG. 8 is a diagram of structures of a switching network according to an embodiment of this application;
FIG. 9 is a diagram of a structure of an antenna system according to an embodiment of this application;
FIG. 10 is a schematic flowchart of an antenna signal detection method according to an embodiment of this application; and
FIG. 11 is a diagram of logical determining of connections between antenna arrays and an RRU according to an embodiment of this application.

### DESCRIPTION OF EMBODIMENTS

The following describes technical solutions in embodiments of this application with reference to the accompanying drawings.

Reference to "an embodiment", "some embodiments", or the like described in this specification means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner.

The terms "comprise", "include", "have", and their variants all mean "include but are not limited to", unless otherwise specifically emphasized in another manner.

In embodiments of this application, "first", "second", and the like are merely intended to indicate that a plurality of objects are different. For example, a first calibration channel and a second calibration channel merely indicate different calibration channels. The terms should impose no impact on the calibration channels and a quantity thereof. "First", "second", and the like described above should not impose any limitation on embodiments of this application.

To facilitate understanding of this application, the following first describes terms in embodiments of this application.
1. Remote radio unit (Remote Radio Unit, RRU): RRU is an apparatus that converts base band optical signals into radio frequency signals at a remote end and amplifies the radio frequency signals. The RRU includes four modules: an intermediate frequency module, a transceiver module, a power amplifier module, and a filtering module.
(2) Baseband (baseband): It is an inherent frequency band (frequency bandwidth) of an original electrical signal that is sent by a source (an information source, also referred to as a sending terminal) that has not undergone modulation (that is, spectrum shifting and conversion). Baseband is referred to as a basic frequency band, which is referred to as baseband for short.
(3) Baseband unit (baseband unit, BBU): The BBU is a general term for component modules that process baseband signals.
(4) Power divider: It is a device that divides energy of one channel of input signals into two or more channels of input signals, and outputs equal or unequal energy, or may combine energy of a plurality of channels of signals into one channel for output. In this case, the power divider may also be referred to as a combiner.
(5) Passive inter-modulation (passive inter-modulation, PIM): also known as passive intermodulation or intermodulation distortion, is an intermodulation product generated when two or more signals are transmitted through a passive component with non-linear characteristics. PIM may occur at a connection point or an interface of any two different metals.

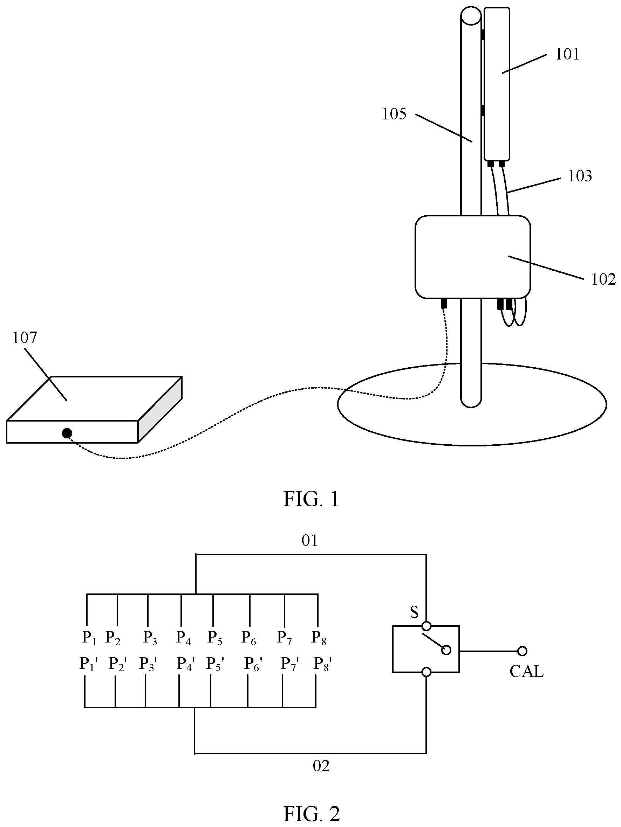

FIG. 1 is a diagram of a system architecture according to an embodiment of this application. An antenna 101 may be disposed on a pole 105, and is connected to an RRU 102 through a feeder 103. The RRU 102 may be connected to a BBU 107 through an optical fiber. The antenna 101 may include several independent arrays formed by radiating elements of different frequencies, and each antenna array may receive or transmit a radio frequency signal through a respective feed network. The antenna 101 may be an antenna system including a plurality of channels, to expand a data transmission capacity. A quantity of base stations corresponding to the antenna system with the plurality of channels increases, and complexity of a connection between the antenna system and the RRU 102 increases. Correctness of a connection topology between the antenna 101 and the RRU 102 directly affects network functionality and performance. Therefore, this application provides an antenna signal detection network, to efficiently and accurately detect correctness of a feeder connection between the antenna 101 and the RRU 102.

FIG. 2 is a diagram of an antenna signal detection network according to an embodiment of this application. As shown in FIG. 2, the detection network may include a first calibration channel 01, a second calibration channel 02, and a switching network S. The first calibration channel 01 and the second calibration channel 02 may be separately connected to an antenna. The antenna may be considered as an antenna array including one or more antenna elements.

The first calibration channel 01 may include a plurality of first output ports, for example, may include eight first output ports P₁, P₂, ..., P₈ shown in the figure. Each first output port may be connected to one antenna array, and phases of the plurality of first output ports may be the same.

It should be noted that, that the phases of the plurality of first output ports are the same does not mean that the phases of the plurality of first output ports are absolutely the same, and the phases of the plurality of first output ports may be approximately the same. For example, when a phase difference between any two first output ports is less than a system error, for example, less than 5°, it may be considered that phases of the two first output ports are the same, to avoid impact of the system error on the phases of the plurality of first output ports.

The second calibration channel 02 may include a plurality of second output ports, and a quantity of the second output ports may be the same as a quantity of the first output ports. When the quantity of the first output ports is eight, the quantity of the second output ports may also be eight. For example, the second output ports may include output ports P₁', P₂', ..., P₈' shown in the figure. Antenna arrays connected to the eight second output ports and the antenna arrays connected to the eight corresponding first output ports may be the same. For example, the output port P₁ and the output port P₁' may be connected to a same antenna array, and the output port P₂ and the output port P₂' may be connected to a same antenna array. The rest can be deduced by analogy.

Phases of the plurality of second output ports on the second calibration channel may be different from each other. That the phases of the plurality of second output ports are different from each other may mean that a phase difference between the plurality of second output ports is greater than or equal to the system error. For example, when a phase difference between any two second output ports is greater than or equal to 5°, it may be considered that phases of the two second output ports are different from each other.

In some embodiments, any one of the plurality of second output ports is a reference port, and phase differences between ports in the plurality of second output ports other than the reference port and the reference port may be different from each other.

Similarly, that the phase differences between the ports in the plurality of second output ports other than the reference port and the reference port are different from each other may mean that a difference between the phase differences is less than a specific range, for example, less than a preset threshold.

In some embodiments, the phase differences between the ports in the plurality of second output ports other than the reference port and the reference port may form an arithmetic progression. For example, the second output port P₁' may serve as a reference port, and a phase of P₁' serve as a reference value. A phase difference between P₂' and P₁' may be n, a phase difference between P₃' and P₁' may be 2n, and a phase difference between P₄' and P₁' may be 3n. By analogy, a phase difference between P₈' and P₁' may be 7n. Phase differences between the phase of P₁' and phases of other ports may form an arithmetic progression whose common difference is n.

In embodiments of this application, a calibration channel may be an entire part that is of a detection network and that is from a transmission line led out from a switching network to an output port, including the transmission line and a component disposed on the transmission line. Both the transmission line and the component disposed on the transmission line may be parts of the corresponding calibration channel. For example, the first calibration channel 01 may be a detection network part that is from a transmission line, corresponding to the first calibration channel 01, led out from the switching network S to all the first output ports, and the second calibration channel 02 may be a detection network part that is from a transmission line, corresponding to the second calibration channel 02, led out from the switching network S to all the second output ports.

Under the action of the switching network S, the first calibration channel 01 and the second calibration channel 02 may be separately connected to a calibration port CAL (calibration) in different time domains. The switching network S may be a single-pole double-throw switch, and the switching network S may also be referred to as a first switching network. The calibration port CAL may be connected to an RRU, and the calibration port CAL may be configured to input a sounding signal. The sounding signal may be a transmission signal between the antenna array and the RRU, so that the detection network can determine, based on the detected signal, whether a connection between an antenna array and the RRU is correct. When the switching network S is connected to the first calibration channel 01, the first calibration channel 01 is connected to the calibration port CAL, and a transmission signal between the antenna array and the RRU may be transmitted on the first calibration channel 01. When the switching network S is connected to the second calibration channel 02, the second calibration channel 02 is connected to the calibration port CAL, and a transmission signal between the antenna array and the RRU may be transmitted on the second calibration channel 02.

In this embodiment provided in this application, the phases of the plurality of first output ports on the first calibration channel 01 are the same. When the first calibration channel is connected to the calibration port CAL through the switching network, phase differences between connections between the RRU and the antenna arrays may be calibrated, to implement that a baseline phase of a system is set to zero. Further, the phases of the plurality of second output ports on the second calibration channel 02 are different from each other. When the second calibration channel is connected to the calibration port CAL through the switching network, the phase differences of the plurality of second output ports can be obtained, so that the network can compare the obtained phase differences with phase differences stored in the system, to quickly and conveniently determine whether connections between antennas and the RRU are incorrect, thereby effectively improving detection efficiency and accuracy. The detection network is disposed to detect whether the connection between the antenna array and the RRU is correct. A radio frequency channel does not need to be improved, and no additional component needs to be disposed to detect a signal. This can avoid increase in loss caused by changes of the radio frequency channel, avoid decrease in system stability, for example, rise in a PIM indicator, can be applied to detection of the connections between the antenna and the RRU in more scenarios, and effectively reduces detection costs.

In some embodiments, the first calibration channel 01 and the second calibration channel 02 each may include multi-level transmission lines. For example, the detection network shown in FIG. 2 includes two-level transmission lines. A first-level transmission line may be connected to the switching network S, and second-level transmission lines are connected to the first-level transmission line. The second-level transmission lines may be considered as branch lines of the first-level transmission line, and each branch line is connected to one output port. For example, when there are eight ports, a quantity of second-level transmission lines may also be eight, and the eight second-level transmission lines are respectively connected to the eight ports.

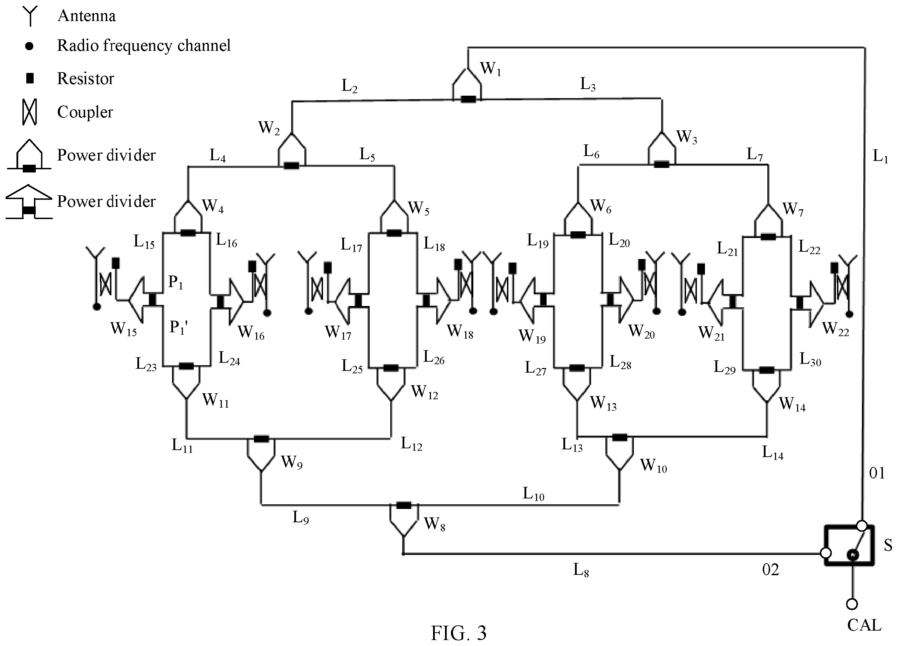

FIG. 3 shows another detection network according to an embodiment of this application. A first calibration channel 01 and a second calibration channel 02 each may include four-level transmission lines. The detection network shown in FIG. 3 may be applied to antenna arrays including four columns of dual-polarized radiating elements. The antenna arrays may include eight radio frequency channels corresponding to eight ports, and last-level transmission lines in multi-level transmission lines may be connected to the eight ports.

The first calibration channel 01 may include four-level transmission lines, where L₁ is a first-level transmission line, and the first-level transmission line L₁ is connected to a switching network S. L₂ and L₃ are second-level transmission lines, and both the second-level transmission lines L₂ and L₃ are connected to the first-level transmission line L₁. L₄, L₅, L₆, and L₇ are third-level transmission lines. The third-level transmission lines L₄ and L₅ may be connected to the second-level transmission line L₂, and L₆ and L₇ may be connected to L₃. One end of each of fourth-level transmission lines L₁₅ and L₁₆ is connected to the third-level transmission line L₄, and the other ends of the fourth-level transmission lines L₁₅ and L₁₆ are respectively connected to first output ports P₁ and P₂. One end of each of L₁₇ and L₁₈ is connected to L₅, and the other ends of L₁₇ and L₁₈ are respectively connected to first output ports P₃ and P₄. One end of each of L₁₉ and L₂₀ is connected to L₆, and the other ends of L₁₉ and L₂₀ are respectively connected to first output ports P₅ and P₆. One end of each of L₂₁ and L₂₂ is connected to L₇, and the other ends of L₂₁ and L₂₂ are respectively connected to first output ports P₇ and P₈.

Similarly, the second calibration channel 02 may also include multi-level transmission lines, for example, may include the four-level transmission lines shown in FIG. 3. L₈ is a first-level transmission line, and is connected to the switching network S. L₉ and L₁₀ are second-level transmission lines, and each are connected to the first-level transmission line L₈. L₁₁, L₁₂, L₁₃, and L₁₄ are third-level transmission lines, L₁₁ and L₁₂ each are connected to L₉, and L₁₃ and L₁₄ each are connected to L₁₀. L₂₃ to L₃₀ are fourth-level transmission lines, where one end of L₂₃ is connected to L₁₁ and the other end of L₂₃ is connected to a second output port P₁', and one end of L₂₄ is connected to L₁₁ and the other end of L₂₄ is connected to a second output port P₃'. By analogy, one end of L₃₀ is connected to a second output port P₈'. A quantity of levels of the multi-level transmission lines in the second calibration channel 02 may be the same as or different from a quantity of levels of the multi-level transmission lines in the first calibration channel 01. For example, the first calibration channel 01 shown in the figure includes four-level transmission lines, and the second calibration channel 02 also includes four-level transmission lines. Alternatively, the second calibration channel 02 may include three-level transmission lines, five-level transmission lines, or the like, provided that arrangement of the transmission lines helps the detection network meet that the phases of the plurality of first output ports on the first calibration channel 01 are the same, and the phases of the plurality of second output ports on the second calibration channel 02 are different from each other.

In some embodiments, ends of the first calibration channel 01 and the second calibration channel 02 may include power dividers. The power divider may include one input port and two output ports. Two output ports of each power divider may be respectively connected to the first calibration channel 01 and the second calibration channel 02, a port that is of each power divider and that is connected to the first calibration channel 01 may be a first output port, and a port that is of each power divider and that is connected to the second calibration channel 02 may be a second output port. In other words, power dividers W₁₅ to W₂₂ shown in FIG. 3 are power dividers disposed at the ends of the first calibration channel 01 and the second calibration channel 02. Two output ports of the power divider W₁₅ are respectively connected to the last-level transmission lines of the first calibration channel 01 and the second calibration channel 02, and the two output ports of W₁₅ are respectively the first output port P₁ and the second output port P₁'. Similarly, two output ports of W₁₆ are respectively the first output port P₂ and the second output port P₂', two output ports of W₁₇ are respectively the first output port P₃ and a second output port P₃', two output ports of W₁₈ are respectively the first output port P₄ and a second output port P₄', two output ports of W₁₉ are respectively the first output port P₅ and a second output port P₅', two output ports of W₂₀ are respectively the first output port P₆ and a second output port P₆', two output ports of W₂₁ are respectively the first output port P₇ and a second output port P₇', and two output ports of W₂₂ are respectively the first output port P₈ and a second output port P₈'.

The power dividers W₁₅ to W₂₂ may be Wilkinson power dividers. The power dividers W₁₅ to W₂₂ are first power dividers, or may be referred to as isolators. The power dividers can be used to prevent signal interference between the first calibration channel 01 and the second calibration channel 02. When the switching network S is connected to the first calibration channel 01, the first calibration channel 01 operates, and the power dividers W₁₅ to W₂₂ can prevent signals passing through the first calibration channel 01 from performing crosstalk to the second calibration channel 02. When the switching network S is connected to the second calibration channel 02, the second calibration channel 02 operates, and the power dividers W₁₅ to W₂₂ can prevent signals passing through the second calibration channel 02 from performing crosstalk to the first calibration channel 01. The manner in which two output ports of each of the power dividers W₁₅ to W₂₂ are respectively connected to the two calibration channels can also implement miniaturization of a layout of the detection network.

There are further couplers at the ends of the first calibration channel 01 and the second calibration channel 02. There may be a plurality of couplers, and a quantity of the couplers may be the same as the quantity of the first output ports and the quantity of the second output ports. The plurality of couplers may be respectively connected to input ports of the power dividers W₁₅ to W₂₂ at the ends of the calibration channels, and the plurality of couplers may be respectively connected to the antenna arrays, so that the plurality of first output ports and the plurality of second output ports are connected to the antenna arrays. The coupler may be configured to: capture a signal transmitted between the antenna arrays and the RRU, and input the captured signal into the calibration port CAL of the detection network, so that the detection network reads the signal. The signal captured by the coupler may be a small part of the signal transmitted between the antenna and the RRU.

The ends of the first calibration channel 01 and the second calibration channel 02 may be further connected to resistors, so as to implement grounding of the detection network. The resistor may be connected to the isolator, and each isolator may be connected to the resistor.

For the first calibration channel 01, one power divider may be not only connected to an end of the last-level transmission line, but also connected to an end of each level of transmission line, to form an output channel. For example, an end of the first-level transmission line L₁ includes a power divider W₁, an input port of the power divider W₁ is connected to L₁, and two output ports of the power divider W₁ are respectively connected to the second-level transmission lines L₂ and L₃. Ends of the second-level transmission lines L₂ and L₃ respectively include power dividers W₂ and W₃, an input port of the power divider W₂ is connected to L₂, two output ports of the power divider W₂ are respectively connected to the third-level transmission lines L₄ and L₅, an input port of the power divider W₃ is connected to L₃, and two output ports of the power divider W₃ are respectively connected to the third-level transmission lines L₆ and L₇. Ends of the third-level transmission lines L₄ and L₅ respectively include power dividers W₄ and W₅. W₄ is connected to output ports, namely, P₁ and P₂, of the power dividers W₁₅ and W₁₆ through the fourth-level transmission lines L₁₅ and L₁₆ respectively. W₅ is connected to output ports, namely, P₃ and P₄, of the power dividers W₁₇ and W₁₈ through L₁₇ and L₁₈ respectively. Similarly, ends of the third-level transmission lines L₆ and L₇ respectively include power dividers W₆ and W₇. W₆ is connected to output ports, namely, P₅ and P₆, of the power dividers W₁₉ and W₂₀ through L₁₉ and L₂₀ respectively. W₇ is connected to output ports, namely, P₇ and P₈, of the power dividers W₂₁ and W₂₂ through L₂₁ and L₂₂ respectively.

The power dividers W₁ to W₇ on the first calibration channel 01 may also be referred to as second power dividers, and the power dividers W₁ to W₇ may be Wilkinson power dividers.

On the first calibration channel 01, each level of transmission line after the power divider W₁ corresponding to the first-level transmission line L₁ may have a same phase. For example, phases of the second-level transmission lines L₂ and L₃ may be the same, phases of the third-level transmission lines L₄, L₅, L₆, and L₇ may be the same, and phases of the fourth-level transmission lines L₁₅ to L₂₂ may be the same. Each level of transmission line in the multi-level transmission lines has a same phase, so that equal-phase output of the first output ports P₁ to P₈ can be implemented.

On the first calibration channel 01, to cause the phase of each level of transmission line of the multi-level transmission lines to be the same, lengths of the multi-level transmission lines may also be the same. For example, lengths of the second-level transmission lines L₂ and L₃ may be the same, lengths of the third-level transmission lines L₄, L₅, L₆, and L₇ may be the same, and phases of the fourth-level transmission lines L₁₅ to L₂₂ may be the same.

Similar to the first calibration channel 01, each level of transmission line of the second calibration channel 02 other than the last-level transmission lines may also include a power divider, and the power divider may be disposed at an end of each level of transmission line. For example, an end of the first-level transmission line L₈ may include a power divider W₈, an input port of the power divider W₈ is connected to L₈, and two output ports of the power divider are respectively connected to the second-level transmission lines L₉ and L₁₀. Ends of the second-level transmission lines L₉ and L₁₀ respectively include power dividers W₉ and W₁₀, an input port of the power divider W₉ is connected to L₉, two output ports of the power divider W₉ are respectively connected to the third-level transmission lines L₁₁ and L₁₂, an input port of the power divider W₁₀ is connected to L₁₀, and two output ports of the power divider W₁₀ are respectively connected to the third-level transmission lines L₁₃ and L₁₄. Ends of the third-level transmission lines L₁₁ and L₁₂ respectively include power dividers W₁₁ and W₁₂. W₁₁ is connected to output ports, namely, P₁' and P₂', of the power dividers W₁₅ and W₁₆ through L₂₃ and L₂₄ respectively. W₁₂ is connected to output ports, namely, P₃' and P₄', of the power dividers W₁₇ and W₁₈ through L₂₅ and L₂₆ respectively, W₁₃ is connected to output ports, namely, P₅' and P₆', of the power dividers W₁₉ and W₂₀ through L₂₇ and L₂₈ respectively, and W₁₄ is connected to output ports, namely, P₇' and P₈', of the power dividers W₂₁ and W₂₂, through L₂₉ and L₃₀ respectively.

The power dividers W₈ to W₁₄ on the second calibration channel 02 may also be referred to as third power dividers, and the power dividers W₈ to W₁₄ may also be Wilkinson power dividers.

On the second calibration channel 02, each level of transmission line after the power divider W₈ corresponding to the first-level transmission line L₈ may have a different phase. That each level of transmission line has a different phase may mean that a phase of the first-level transmission line L₈ may be different from phases of the second-level transmission lines L₉ and L₁₀ and phases of the third-level transmission lines L₁₁ to L₁₄. In addition, when each level of transmission line includes a plurality of transmission lines, phases of the plurality of transmission lines may also be different from each other. For example, when the second-level transmission lines include L₉ and L₁₀, phases of L₉ and L₁₀ may be different from each other, phases of the third-level transmission lines L₁₁ to L₁₄ may also be different from each other, and phases of the fourth-level transmission lines L₂₃ to L₃₀ may also be different from each other. In this way, phases of the second output ports can be different from each other.

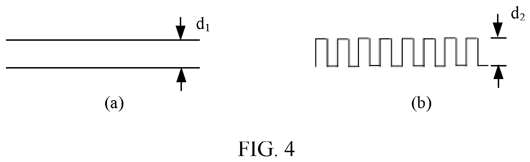

To make lengths of the multi-level transmission lines different from each other, each level of transmission line may have a different length. For example, when the transmission line in the second calibration channel 02 may be a conventional microstrip transmission line shown in (a) in FIG. 4, it may be set that each level of transmission line has a different length, so that phases of all levels of transmission lines are different from each other. That each level of transmission line has a different length may mean that a length of the first-level transmission line L₈ is different from lengths of the second-level transmission lines L₉ and L₁₀ and lengths of the third-level transmission lines L₁₁ to L₁₄. In addition, when each level of transmission line includes a plurality of transmission lines, lengths of the plurality of transmission lines may also be different from each other. For example, when the second-level transmission lines include L₉ and L₁₀, lengths of L₉ and L₁₀ may be different from each other, lengths of the third-level transmission lines L₁₁ to L₁₄ may also be different from each other, and lengths of the fourth-level transmission lines L₂₃ to L₃₀ may also be different from each other.

For example, the length of the second-level transmission line L₁₀ may be greater than the length of L₉, so that the phase of L₉ is less than the phase of L₁₀. The length of the third-level transmission line L₁₁ may be less than the length of L₁₂, and the phase of L₁₁ may be less than the phase of L₁₂; the length of L₁₃ may be less than the length of L₁₄, and the phase of L₁₃ may be less than the phase of L₁₄; the length of L₁₂ may be less than the length of L₁₃, and the phase of L₁₂ may be less than the phase of L₁₃, so that the lengths of the third-level transmission lines gradually increase from L₁₁ to L₁₄, and the phases of the third-level transmission lines gradually increase from L₁₁ to L₁₄. Similarly, in the last-level transmission lines, that is, the fourth-level transmission lines, a length of L₂₃ may be less than a length of L₂₄, and a length of L₂₅ may be less than a length of L₂₆. The rest can be deduced by analogy, and lengths of L₂₃ to L₃₀ may gradually increase. In this way, phases of output ports, that is, P₁' to P₈', of power dividers connected to the last-level transmission lines are different from each other. In addition, when the foregoing length relationship of the transmission lines is met, the phases of P₁' to P₈' may gradually increase from P₁' to P₈'. For example, phase differences between P₂' to P₈' and P₁' may be respectively n, 2n, ..., 6n, 7n, to form an arithmetic progression.

It should be noted that, in the foregoing example, lengths of the last-level transmission lines of the multi-level transmission lines gradually increase from L₂₃ to L₃₀, and phases of the last-level transmission lines also gradually increase from L₂₃ to L₃₀. A relationship between lengths and phases of the multi-level transmission lines of the second calibration channel in this application should not be limited. In this application, the lengths of the multi-level transmission lines of the second calibration channel only need to be different from each other, and the phases of the multi-level transmission lines of the second calibration channel only need to be different from each other. For example, the phase differences between P₂' to P₈' and P1' form an arithmetic progression, or differences between a phase of any port in P₁' to P₈' and phases of other ports forms an arithmetic progression, and the arithmetic progression may not be formed according to a port sequence.

In addition to the conventional microstrip transmission line, the multi-level transmission lines in the second calibration channel 02 may alternatively use slow-wave microstrip transmission lines. For the slow-wave microstrip transmission line, refer to a structure shown in (b) in FIG. 4. The width d₂ of the slow-wave microstrip transmission line may be greater than the width d₁ of the conventional microstrip transmission line. The slow-wave transmission line can implement phase lag, thereby implementing a phase difference required between a plurality of output ports. For example, it is assumed that the phases of the plurality of second output ports P₁' to P₈' gradually increase from P₁' to P₈'. For the second-level transmission lines L₉ and L₁₀, the phase of L₉ may be less than the phase of L₁₀. In this case, L₉ may use the conventional microstrip transmission line, and L₁₀ may use the slow-wave microstrip transmission line. In this case, the length of L₉ may be the same as the length of L₁₀. Because L₁₀ uses the slow-wave transmission line, the phase of L₁₀ lags behind, and an absolute phase amount of L₁₀ may be greater than that of L₉ of the same length. Similarly, when the phases of P₁' to P₈' gradually increase from P₁' to P₈', in the third-level transmission lines, L₁₁ may be a conventional microstrip transmission line, L₁₂ may be a slow-wave microstrip transmission line, the length of L₁₁ may be the same as the length of L₁₂, and the phase of L₁₁ may be less than the phase of L₁₂. L₁₃ may be a conventional microstrip transmission line, L₁₄ may be a slow-wave microstrip transmission line, the length of L₁₃ may be the same as the length of L₁₄, the phase of L₁₃ may be less than the phase of L₁₄, and the lengths of L₁₁ and L₁₂ may be less than the lengths of L₁₃ and L₁₄. In the fourth-level transmission lines, L₂₃ may use a conventional microstrip transmission line, L₂₄ may use a slow-wave microstrip transmission line, the length of L₂₃ may be the same as the length of L₂₄, and the phase of L₂₃ may be less than the phase of L₂₄. L₂₅ may use a conventional microstrip transmission line, L₂₆ may use a slow-wave microstrip transmission line, the length of L₂₅ may be the same as the length of L₂₆, the phase of L₂₅ may be less than the phase of L₂₆, and the lengths of L₂₃ and L₂₄ may be less than the lengths of L₂₅ and L₂₆. The rest can be deduced by analogy.

It should be noted that on the first calibration channel 01, phases of first output ports are the same, and phases of all levels of transmission lines are also the same. Therefore, all transmission lines on the first calibration channel 01 may use conventional microstrip transmission lines or slow-wave microstrip transmission lines, and differentiated setting does not need to be performed on the all levels of transmission lines.

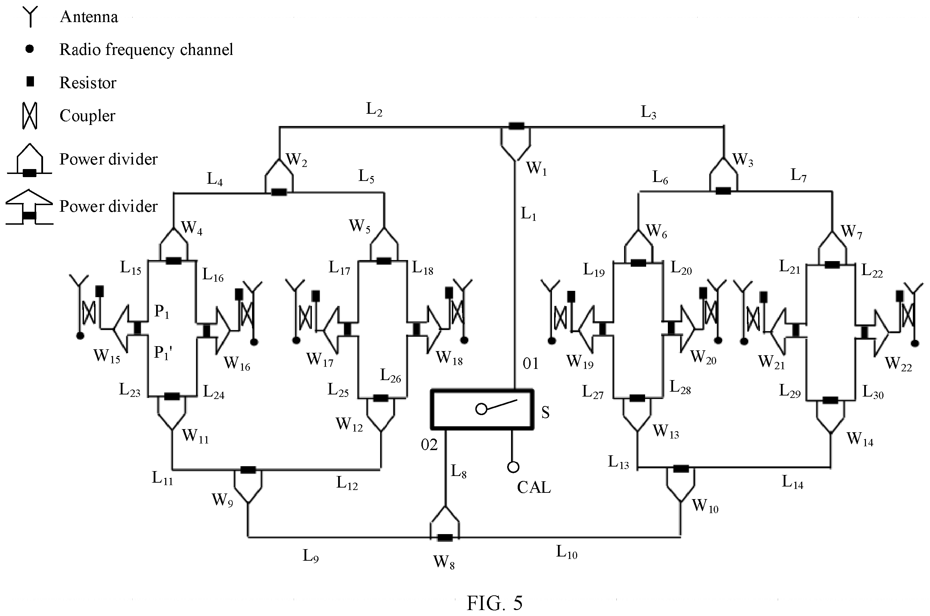

The switching network S of the detection network described in FIG. 3 is disposed at a peripheral part of the detection network, and the switching network S may alternatively be disposed inside the detection network. For example, the first-level transmission lines connected to the switching network S may be disposed in an area enclosed by the second-level transmission lines of the two calibration channels, as shown in the detection network shown in FIG. 5, so that cabling space of the detection network can be further reduced. Other parts of the detection network shown in FIG. 5 is similar to those of the detection network shown in FIG. 3, and details are not described herein again.

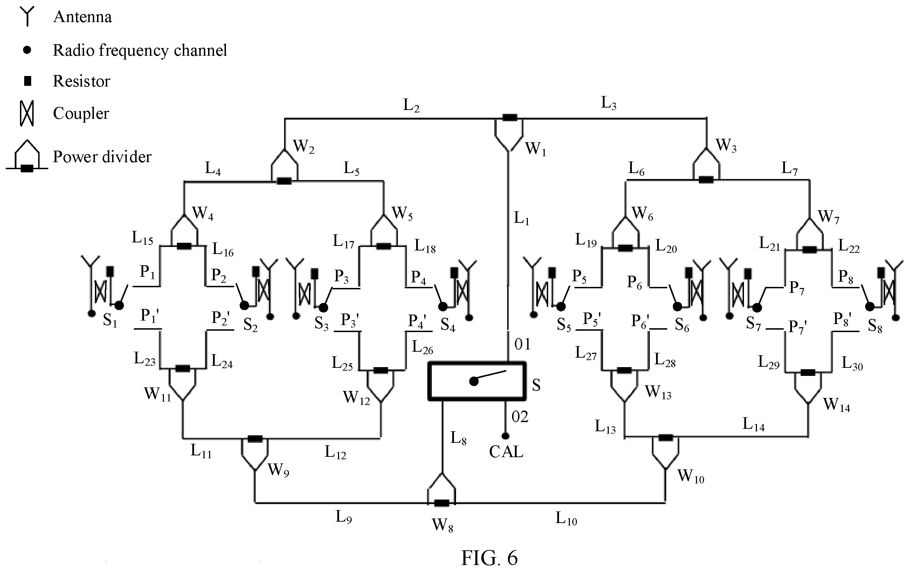

In the detection networks described in FIG. 3 and FIG. 5, the power dividers W₁₅ to W₂₂ are used as isolators to separately connect the two calibration channels and implement signal interference-free between the two calibration channels. In the detection network, switching networks may alternatively be used as isolators to connect the two calibration channels and implement interference-free. For the detection network, refer to a network structure shown in FIG. 6.

As shown in FIG. 6, the detection network may include switching networks S₁ to S₈. The switching networks S₁ to S₈ may be disposed at ends of the first calibration channel 01 and the second calibration channel 02, and two output ports of each of the switching networks S₁ to S₈ may be respectively connected to the first calibration channel 01 and the second calibration channel 02. An output port that is of S₁ and that is connected to the first calibration channel 01 may be the first output port P₁, and an output port that is of S₁ and that is connected to the second calibration channel 02 may be the second output port P₁'. An output port that is of S₂ and that is connected to the first calibration channel 01 may be the first output port P₂, and an output port that is of S₂ and that is connected to the second calibration channel 02 may be the second output port P₂'. An output port that is of S₃ and that is connected to the first calibration channel 01 may be the first output port P₃, and an output port that is of S₃ and that is connected to the second calibration channel 02 may be the second output port P₃'. By analogy, an output port that is of S₈ and that is connected to the first calibration channel 01 may be the first output port P₈, and an output port that is of S₈ and that is connected to the second calibration channel 02 may be the second output port P₈'.

Input ports of the switching networks S₁ to S₈ may also be connected to couplers, to capture the transmission signal between the antenna arrays and the RRU for the detection network to perform detection. A disposition manner of the multi-level transmission lines in the detection network may be the same as that of the multi-level transmission lines in the detection network described in FIG. 3 and FIG. 5. The switching networks S₁ to S₈ may be connected to ends of last-level transmission lines of the multi-level transmission lines, and an end of each level of transmission line in the multi-level transmission lines other than the last-level transmission lines may also be connected to a power divider. To avoid repetition, details are not described herein again.

The switching networks S₁ to S₈ may be single-pole double-throw switches, and the switching networks S₁ to S₈ may also be referred to as second switching networks. When the switching network S is connected to the first calibration channel 01 and the switching network S₁ to S₈ are also connected to the first calibration channel 01, the first calibration channel 01 operates, but the second calibration channel 02 is not connected. Similarly, when the switching network S is connected to the second calibration channel 02 and the switching network S₁ to S₈ are also connected to the second calibration channel 02, the second calibration channel 02 operates, but the first calibration channel 01 is not connected. In this way, signals of the first calibration channel 01 and the second calibration channel 02 do not interfere with each other during operation.

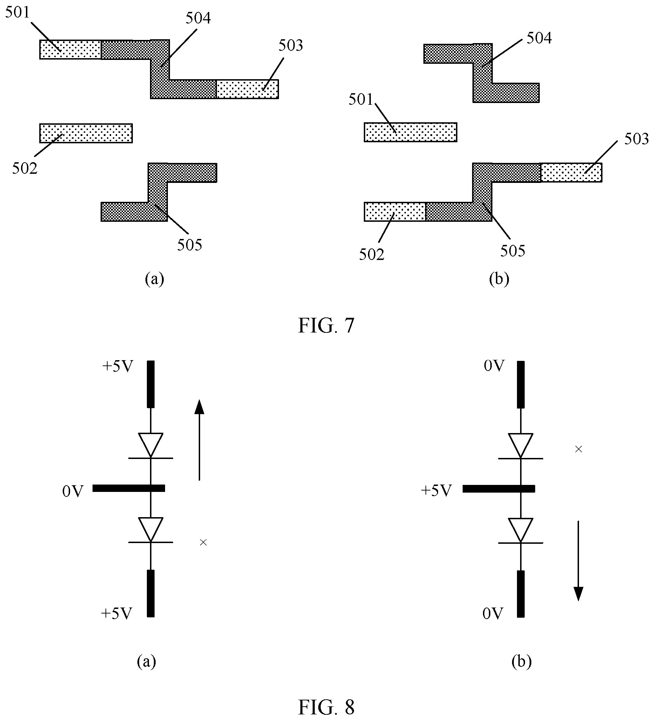

A switch of the first switching network S used in any one of detection networks described in FIG. 2 to FIG. 6 may be an analog switch or a PIN diode switch, and switches of the second switching networks S₁ to S₈ may also be analog switches or PIN diode switches. For the analog switch and the PIN diode switch, respectively refer to a diagram of switches shown in FIG. 7 or FIG. 8. The analog switch is a switch that uses a metal-oxide semiconductor field-effect transistor (metal-oxide-semiconductor field-effect transistor, MOSFET) to implement connection and disconnection of a signal link, thereby achieving a switching effect. The PIN diode switch is a diode of a P-I-N structure formed by adding a thin-layer and low-doped intrinsic (intrinsic) semiconductor layer between P-type semiconductor and N-type semiconductor materials. The PIN diode switch may also be referred to as a PIN diode for short.

FIG. 7 is a diagram of states of a switching network according to an embodiment of this application. A cable 501, a cable 502, and a cable 503 may be fixed cables. The cable 503 may be an input end of the switching network, and is configured to input a sounding signal input from a calibration port. The cable 501 and the cable 502 may be output ends of the switching network, the cable 501 may be connected to the first calibration channel 01, and the cable 502 may be connected to the second calibration channel 02. A slider 504 and a slider 505 may slide, to select a calibration channel that needs to be connected. For example, when the switching network is in a state shown in (a) in FIG. 7, one end of the slider 504 may be coupled to the cable 503, and the other end of the slider 504 may be coupled to the cable 501, so that the first calibration channel 01 can be connected. If the slider 504 and the slider 505 slide upwards from the state shown in (a) in FIG. 7, the switching network may be set to a state shown in (b) in FIG. 7. To be specific, one end of the slider 505 is coupled to the cable 503, and the other end of the slider 505 is coupled to the cable 502, so that the second calibration channel 02 is connected.

FIG. 8 is a diagram of a status of a PIN diode switch according to an embodiment of this application. The PIN diode switch may include an upper diode and a lower diode, which are respectively configured to control connection and disconnection of the first calibration channel 01 and connection and disconnection of the second calibration channel 02. As shown in (a) in FIG. 8, when a forward voltage is applied to the upper diode, the upper diode is in an on state, and when the upper diode is connected to the first calibration channel 01, the first calibration channel 01 is connected. When a forward voltage is applied to the upper diode, a reverse voltage may be simultaneously applied to the lower diode, so that the lower diode is in a cut-off state. When the lower diode is connected to the second calibration channel 02, the second calibration channel 02 is disconnected.

Similarly, as shown in (b) in FIG. 8, when a reverse voltage is applied to the upper diode, the upper diode is in a cut-off state, and the first calibration channel 01 is disconnected; and a forward voltage is simultaneously applied to the lower diode, so that the lower diode is in an on state, and the second calibration channel 02 is connected.

Based on the switching network provided in embodiments of this application, a miniaturization design can be implemented, and space occupied by the detection network can be reduced.

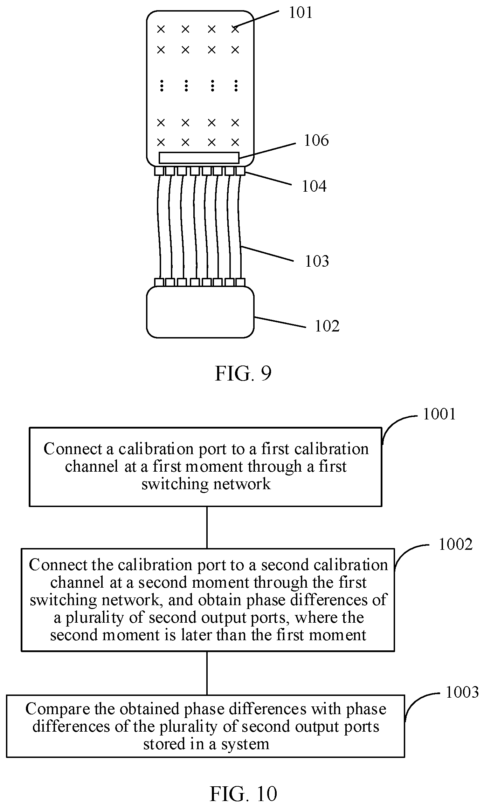

The detection networks described in FIG. 2 to FIG. 8 may be integrated into a calibration board 106, and the calibration board 106 may be disposed on a side on which the antenna 101 is located, as shown in FIG. 9. The antenna 101 may be connected to a radio frequency channel 104, the radio frequency channel 104 may be connected to an RRU 102, and the antenna 101 may receive, through the radio frequency channel 104, a signal transmitted by the RRU 102 or transmit a signal to the RRU 102. The calibration board 106 may be connected to both the antenna 101 and the RRU 102. For example, the calibration board 106 may be connected to the radio frequency channel 104 through a calibration port CAL of the detection network, and then connected to the RRU 102. An output port of the detection network may be connected to the antenna 101, in other words, may be connected to the antenna 101 through a coupler connected to the output port, to capture a signal transmitted between the antenna 101 and the RRU 102, and detect whether a feeder connection between the antenna 101 and the RRU 102 is correct.

An embodiment of this application further provides an antenna signal detection method. The detection method may be used to detect an antenna signal through any one of detection networks described in FIG. 2 to FIG. 8. As shown in FIG. 10, the method may include step S1001 to step S1003.

S1001: Connect a calibration port to a first calibration channel at a first moment through a first switching network.

For example, the first switching network may be set to a state shown in (a) in FIG. 7 or (a) in FIG. 8, so that the first calibration channel 01 is connected to the calibration port. Phases of first output ports on the first calibration channel 01 are the same, so that a phase of a system can be set to zero. For example, errors caused by different lengths of a plurality of feeders connected between antenna arrays and an RRU or other cases can be all calibrated. In this way, phase differences of a plurality of calibration ports, namely, second output ports, can be subsequently obtained.

S1002: Connect the calibration port to a second calibration channel at a second moment through the first switching network, and obtain the phase differences of the plurality of second output ports.

The second moment may be later than the first moment. In other words, the first calibration channel 01 and the calibration port may be first connected, and then the second calibration channel 02 is connected after the phase of the system is set to zero, to obtain the phase difference of the plurality of second output ports.

S1003: Compare the obtained phase differences with phase differences of the plurality of second output ports stored in the system.

The system may prestore the phase differences of the plurality of second output ports. When the second calibration channel 02 is connected, the actual phase differences of the plurality of second output ports may be obtained. The stored phase differences of the second output ports are compared with the actual phase differences of the corresponding ports. In this way, whether a connection between an antenna array and the RRU is correct can be determined.

If a difference in differences between the obtained phase differences and the stored phase differences is less than a preset threshold, it may be determined that the connection between the antenna and the RRU is correct; or if a difference in differences between the obtained phase differences and the stored phase differences is greater than or equal to a preset threshold, it may be determined that the connection between the antenna and the RRU is incorrect.

In some embodiments, if the connection between the antenna array and the RRU is incorrect, the method may further include: performing logical mapping and exchange for the connection between the antenna array and the RRU.

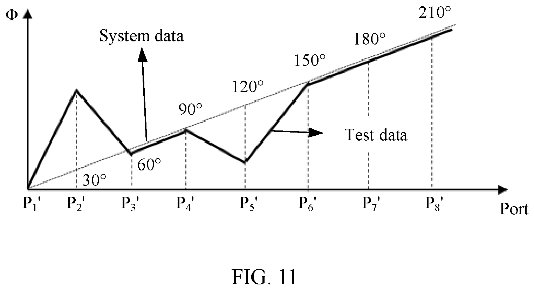

For example, FIG. 11 is a diagram of logical determining of connections between antenna arrays and an RRU according to an embodiment of this application. A horizontal coordinate represents a port, where the detection network may include eight ports P₁' to P₈', and a vertical coordinate represents a phase difference. In the diagram, the port P₁' may be used as a reference port, a phase difference of each port may be a phase difference between each port and the port P₂', and a start point may be a phase difference between the port P₁' and the port P₁', that is, 0. A dashed line in the figure indicates system data, namely, the phase differences of the ports stored in the system. A solid line indicates test data, namely, the actual phase differences of the ports obtained by performing step S1001 and step S1002 in sequence.

It can be learned from FIG. 11 that a phase difference that is stored in the system and that is of the port P₂' is 30°, but an actually measured phase difference of the port P₂' is about 120°. A difference between the phase difference stored in the system and the actually measured phase difference is greater than a system error. Therefore, a connection of the port P₂' is incorrect. Similarly, a phase difference that is stored in the system and that is of the port P₅' is 120°, but an actually measured phase difference of the port P₅' is about 30°. Therefore, a connection of the port P₅' is incorrect. In this example, the system may perform logical mapping and exchange on the connections that are between the antenna and the RRU and that correspond to the port P₂' and the port P₅', and feeder connections do not need to be replaced on a tower.

According to the antenna signal detection method in embodiments of this application, whether feeder connections between the antenna and the RRU are incorrect can be quickly and conveniently detected. In this way, the feeder connections are adjusted in a manner such as logical mapping and exchange, and connections do not need to be replaced on the tower.

An embodiment of this application further provides an antenna system. The antenna system may include any detection network described in FIG. 2 to FIG. 8. The antenna system may further include an antenna array. The antenna array may be connected to a detection network, and the antenna array may include one or more antenna elements.

An embodiment of this application further provides a base station. The base station may include the foregoing antenna system and a radio frequency module, and the radio frequency module may be connected to the antenna system.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An antenna signal detection network, comprising a first calibration channel, a second calibration channel, and a first switching network, wherein
the first calibration channel comprises a plurality of first output ports, and phases of the plurality of first output ports are the same;
the second calibration channel comprises a plurality of second output ports, a quantity of the plurality of second output ports is the same as a quantity of the plurality of first output ports, phases of the plurality of second output ports are different from each other, and the plurality of first output ports and the plurality of second output ports are separately connected to antenna arrays; and
the first switching network is connected to both the first calibration channel and the second calibration channel, and is configured to connect the first calibration channel and the second calibration channel to a calibration port in different time domains, wherein the calibration port is connected to a remote radio unit RRU, and the calibration port is configured to input a transmission signal between the antenna array and the RRU.

2. The detection network according to claim 1, wherein any one of the plurality of second output ports is a reference port, and phase differences between ports in the plurality of second output ports other than the reference port and the reference port are different from each other.

3. The detection network according to claim 2, wherein the phase differences between the ports in the plurality of second output ports other than the reference port and the reference port form an arithmetic progression.

4. The detection network according to any one of claims 1 to 3, wherein there are a plurality of isolators at ends of the first calibration channel and the second calibration channel, the plurality of isolators are configured to prevent signal interference between the first calibration channel and the second calibration channel, and the first calibration channel and the second calibration channel are respectively connected to two output ports of each of the plurality of isolators, wherein
output ports that are of the plurality of isolators and that are connected to the first calibration channel are the first output ports, and output ports that are of the plurality of isolators and that are connected to the second calibration channel are the second output ports.

5. The detection network according to claim 4, wherein there are further a plurality of couplers at the ends of the first calibration channel and the second calibration channel, the plurality of couplers are respectively connected to input ports of the plurality of isolators, and the plurality of couplers are connected to the antenna array.

6. The detection network according to claim 4 or 5, wherein the isolator is a first power divider or a second switching network.

7. The detection network according to any one of claims 4 to 6, wherein the first calibration channel comprises multi-level transmission lines, and last-level transmission lines in the multi-level transmission lines of the first calibration channel are connected to the plurality of isolators, wherein
in the multi-level transmission lines of the first calibration channel, there is a second power divider at an end of each level of transmission line other than the last-level transmission line, and phases of transmission lines corresponding to two output ports of each second power divider are the same.

8. The detection network according to any one of claims 4 to 7, wherein the second calibration channel comprises multi-level transmission lines, and last-level transmission lines in the multi-level transmission lines of the second calibration channel are connected to the plurality of isolators, wherein
in the multi-level transmission lines of the second calibration channel, there is a third power divider at an end of each level of transmission line other than the last-level transmission lines, and phases of transmission lines corresponding to two output ports of each third power divider are different from each other.

9. The detection network according to any one of claims 1 to 8, wherein a switch of the first switching network is an analog switch or a PIN diode switch.

10. The detection network according to any one of claims 1 to 9, wherein the quantity of the first output ports and/or the quantity of the second output ports are/is greater than or equal to 8.

11. An antenna signal detection method, applied to the detection network according to any one of claims 1 to 10, wherein the detection method comprises:
connecting the calibration port to the first calibration channel at a first moment through the first switching network;
connecting the calibration port to the second calibration channel at a second moment through the first switching network, and obtaining phase differences of the plurality of second output ports, wherein the second moment is later than the first moment; and
comparing the obtained phase differences with phase differences of the plurality of second output ports stored in a system.

12. The detection method according to claim 11, wherein the detection method further comprises:
when a difference in differences between the obtained phase differences and the phase differences of the plurality of second output ports stored in the system is less than a preset threshold, determining that a connection between the antenna array and the RRU is correct; or
when a difference in differences between the obtained phase differences and the phase differences of the plurality of second output ports stored in the system is greater than or equal to a preset threshold, determining that a connection between the antenna array and the RRU is incorrect.

13. The detection method according to claim 12, wherein when the connection between the antenna array and the RRU is incorrect, the detection method further comprises:
performing logical mapping and exchange for the connection between the antenna array and the RRU.

14. An antenna system, comprising the detection network according to any one of claims 1 to 10 and antenna arrays, wherein the antenna array comprises one or more antenna elements.

15. A base station, comprising the antenna system according to claim 14 and a radio frequency module connected to the antenna system.
